# EUROPEAN PATENT SPECIFICATION

(11) **EP 2 312 041 B1**
(45) Date of publication and mention of the grant of the patent: **07.12.2016**
(21) Application number: 10175686.4
(22) Date of filing: 08.09.2010
(51) Int. Cl.: D06F 37/42

(54) **Door Lock Control Apparatus and Method of Washing Machine**
Türschlosssteuerungsvorrichtung und Verfahren für eine Waschmaschine
Appareil de contrôle du verrouillage de la porte et procédé pour machine à laver

(30) Priority: 13.10.2009 KR 20090097215
(43) Date of publication of application: 20.04.2011
(73) Proprietor: Samsung Electronics Co., Ltd., Suwon-si, Gyeonggi-do, 443-742 (KR)
(72) Inventor: Yang, Ha Yeong, Gyeonggi-do (KR)
(74) Representative: Grünecker Patent- und Rechtsanwälte PartG mbB

(56) References cited:
- EP-A1- 1 116 812
- EP-A1- 2 416 226
- US-A- 4 510 777
- US-A- 4 866 955
- US-A- 5 742 964
- US-A1- 2004 211 228

## Description

### BACKGROUND

### 1. Field

Embodiments relate to a door lock control apparatus and method of a washing machine which senses opening and closing of a door using a door lock switch.

### 2. Description of the Related Art

In general, a washing machine (generally, a drum type washing machine) includes a tub to contain water (washing water or rinsing water), a drum rotatably mounted in the tub to contain laundry, and a motor to generate driving force to rotate the drum, and washes the laundry by raising and dropping the laundry in the drum along the inner wall of the drum when the cylindrical drum is rotated.

In such a washing machine, a door is openably and closably provided such that the laundry is put into or taken out of the drum, and a door lock switch to lock the door such that the door is not opened during the operation of the washing machine is provided on one side of the door.

The door lock switch simultaneously performs a lock/unlock function of the door and a power on/off function of an electrical part. To this end, the electrical part is operated only when the door is closed, such that a user is protected from accidents during mechanical operation, such as the rotation of the drum.

In the door lock switch, a bimetal latch or a solenoid is used to perform the lock/unlock operation of the door. As the quality of a product is improved, a time consumed for lock/unlock is relatively increased. Thus, the solenoid scheme is preferred to the bimetal latch scheme. In order to reduce costs, even in the solenoid scheme, a method of controlling a lock/unlock operation by toggling one solenoid instead of two solenoids has been developed.

Recently, a door lock switch including a switch to sense opening or closing of a door in addition to a basic operation such as a lock/unlock operation of the door has been developed. When the door is not closed, the electrical part is not powered on so as to prevent Product Liability (PL) accidents in advance. However, since a separate switch is added to mechanically reject the opening or closing of the door, this door lock switch is not preferable in terms of cost reduction.

US 4,510,777 A discloses a control system for an access door. A catch hook as part of a corresponding door may be locked by a second leg of a latch lever. In such a lock position of the second leg, a tab will engage with an actuator button of a lock switch. Any displacement of the corresponding latch lever is formed by actuating a solenoid. Contacts of the lock switch are then closed and the circuit path is completed from the micro controller to the lock switch to ground. The circuit path indicates to the micro-controller, that the access door has been closed and locked.

US 2004/21122 A1 discloses a washing machine capable of detecting leakage at the water feed unit. It is referred to some lock mechanism and a door lock detecting unit. The door lock mechanism is actuated for locking the door. However, with respect to the lock mechanism it is only said that this is a latch type mechanism.

US 4,866,955 A discloses an appliance control circuit. There seems to be no switch for locking or unlocking a door. Instead, it is detected that the access door is closed as in such a position, the contacts of the access door actuate switch are closed.

EP 1116812 A1 discloses a washing machine with a door and a locking device. This locking device includes in particular a claw that can be pivoted to be in engagement with the locking section. Two detecting switches are used to detect the position of the claw and further, a door locking solenoid is used with a plunger that prevents the claw from being rotated by such an angle that it is disengaged from the locking section.

### SUMMARY

Additional aspects and/or advantages will be set forth in part in the description which follows and, in part, will be apparent from the description, or may be learned by practice of the invention.

It is an object of the invention to provide a door lock control apparatus and method of a washing machine, which performs a lock/unlock operation of a door and senses the closing or opening of the door using a door lock switch without adding a separate switch to sense the closing or opening of the door.

Additional aspects will be set forth in part in the description which follows and, in part, will be obvious from the description, or may be learned by practice of the invention.

The object is solved by the features of the independent claims.

Advantageous embodiments are disclosed by the subclaims.

The door lock switch may include a door switch turned on/off according to the closing or opening of the door and a main switch to power on or off an electrical part, and the door switch and the main switch may be configured by one switch.

The control unit may stop the operation of the washing machine if a determination is that the door is opened during the operation of the washing machine.

The door lock switch may sense whether the door is forcibly opened in a state in which the door is locked.

The door lock control signal may operate the door lock relay in a pulsed mode to enable current to flow in the main solenoid for a predetermined time.

The door switch may be connected between the main solenoid and a power supply, the main solenoid may be connected between the door lock relay and the door switch, and the main switch may connect the power supply and the electrical part.

The door lock switch may have three terminals to connect the door switch, the main solenoid and the main switch.

In accordance with another aspect, there is provided a door lock control method of a washing machine, the door lock control method including: operating a door lock switch to lock the door if a door is closed; performing an operation of the washing machine in a state in which the door is locked; sensing whether the door is opened during the operation of the washing machine; and stopping the operation of the washing machine if the door is sensed to be opened during the operation of the washing machine, and,
determining the opened or closed state of the door according to the door opening/closing signal and controlling the operation of the washing machine.

According to the door lock control device and method of the washing machine, since the door is locked or unlocked and the opening or closing of the door is sensed using one door lock switch without adding a separate switch to sense the opening or closing of the door, cost may be decreased.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a perspective view showing the configuration of a washing machine according to an embodiment;
FIG. 2 is a diagram showing a door lock control circuit of a washing machine according to an embodiment;
FIG. 3 is a pulse waveform diagram of a door lock control signal according to an embodiment;
FIG. 4 is a flowchart illustrating a door lock control method of a washing machine according to an embodiment;
FIG. 5 is a diagram showing a closed loop which is formed in order to sense the opening or closing of a door of a washing machine according to an embodiment; and
FIG. 6 is a diagram showing a closed loop which is formed in order to control a lock operation of a door of a washing machine according to an embodiment.

### DETAILED DESCRIPTION

Reference will now be made in detail to the embodiments, examples of which are illustrated in the accompanying drawings, wherein like reference numerals refer to the like elements throughout. The embodiments are described below to explain the present invention by referring to the figures.

Reference will now be made in detail to the embodiments of the present invention, examples of which are illustrated in the accompanying drawings.

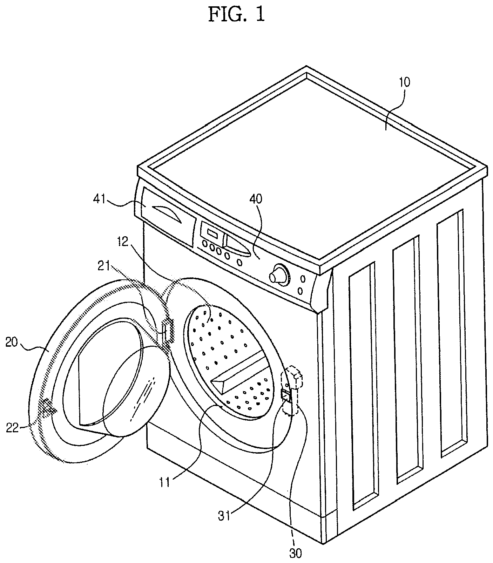

FIG. 1 is a perspective view showing the configuration of a washing machine according to an embodiment of the present invention.

In FIG. 1, the washing machine according to the embodiment includes a main body 10 substantially having a box shape and including an opening 11 formed in a front surface thereof to put or take laundry into or out of the washing machine, a cylindrical drum 12 rotatably mounted in the main body 12 to contain the laundry, and a door 20 provided in the front surface of the main body 10 to open or close the opening 11.

The door 20 is rotatably coupled to the main body 10 by a hinge member 21 provided on one side of the washing machine and is coupled to a door lock device 30 by a hook member 22 provided on the other side of the washing machine, and the door 20 is locked such that the door 20 is not opened during an operation of the washing machine.

A coupling member 31 to couple or decouple the hook member 22 to or from the main body 10 is formed in the door lock device 30 so as to lock or unlock the door 20.

In addition, a control panel 40 to control the washing machine is provided on an upper side of the front surface of the main body 10, and a detergent drawer 41 is provided on one side of the control panel 40.

Although not shown, a main motor is provided on an outer side of a rear surface of the drum 12 as a driving device to rotate the drum 12.

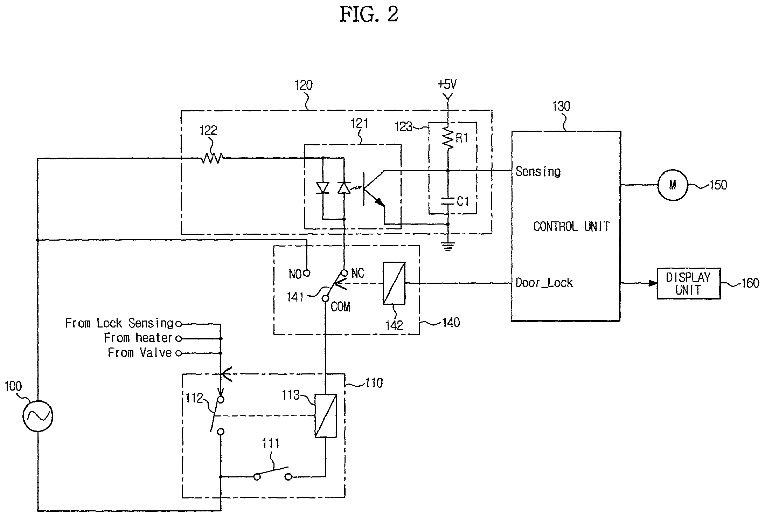

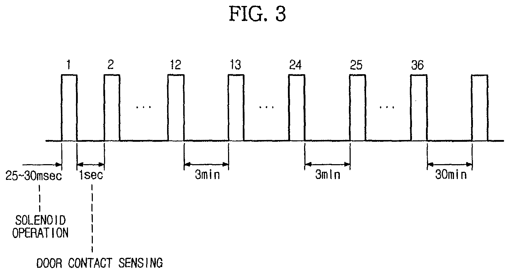

FIG. 2 is a diagram showing a door lock control circuit of a washing machine according to an embodiment, and FIG. 3 is a pulse waveform diagram of a door lock control signal according to an embodiment.

In FIG. 2, a door lock control device of a washing machine of one embodiment includes a door lock switch 110 to lock/unlock the door 20 and to sense the closing or opening of the door 20, a sensor 120 to sense the closing or opening state of the door 20 according to an operation of the door lock switch 110 to output a door opening/closing signal, a control unit 130 to receive the door opening/closing signal from the sensor 120, to the lock/unlock of the door 20 and to control the operation of the washing machine, a 3-pole door lock relay 140 to operate the door lock switch 110 to power on or off an electrical part according to the door lock control signal of the control unit 130, a main motor 150 driven according to a motor control signal of the control unit 130, and a display unit 160 to display an operation state of the washing machine according to a display control signal of the control unit 130.

The door lock switch 110 includes a door (single) switch 111, of a contact type which is turned on/off according to the closing or opening of the door 20 to sense the closing or opening of the door 20, a main or solenoid operated switch 112 to power on/off the electrical part (a heater, a valve or the like), and a main solenoid 113 in which current flows according to an operation of the door lock relay 140 control a switching operation of the main switch 112.

The sensor part 120 includes a photo-coupler 121 to sense optically a contact state of the door switch 111 according to the on/off state of the door switch 111 and to output the door opening/closing signal to an input terminal (Sensing) of the control unit 130, a current limit resistor 122 to limit current of a power supply 100 applied to the photo-coupler 121, and an integrator 123 to stabilize the current value of the door opening/closing signal input to the input terminal (Sensing) of the control unit 130. The integrator 123 includes a resistor R1 and a capacitor C1.

The control unit 130 determines the opening or closing state of the door 20 according to the door opening/closing signal received from the sensor part 120 and controls the driving of the door lock relay 140 and the driving of the main motor 150. For example, if the control unit 130 determines that the door 20 is closed, the control unit outputs a door lock control signal to the door lock relay 140 through an output terminal (Door_Lock). The door lock control signal output through the output terminal (Door_Lock) is shown in FIG. 3.

In FIG. 3, in the door lock control signal, a rectangular pulse for a predetermined time (25 to 30 msec) is output such that the door lock relay 140 operates in a pulsed mode, and a time interval between pulses is gradually increased (1 sec, 3 min, 30 min, ...) according to the number of times of sensing of the contact of the door switch 111 to protect the door lock relay 140.

The door lock relay 140 includes a 3-pole switch 141 to switch terminals COM, NC and NO to control the switching operation of the main switch 112 according to the door lock control signal output from the output terminal (Door_Lock) of the control unit 130 and a control solenoid 142 in which current flows according to the door lock control signal to switch the terminals of the 3-pole switch 141.

Accordingly, when the door lock relay 140 receives the door lock control signal shown in FIG. 3 from the control unit 130, current flows in the control solenoid 142 for the predetermined time (25 to 30 msec) such that the common terminal COM of the 3-pole switch 141 is switched from the normally closed terminal NC to the normally open terminal NO. When the common terminal COM of the 3-pole switch 141 is switched from the normally closed terminal NC to the normally open terminal NO, current flows in the main solenoid 113 of the door lock switch 110 to turn on the main switch 112 such that the door 20 is mechanically locked.

Thereafter, when the predetermined time (25 to 30 msec) elapses, the rectangular pulse input to the control solenoid 142 of the door lock relay 140 becomes a low level, the current flowing in the control solenoid 142 is cut off, and the common terminal COM of the 3-pole switch 141 is switched from the normally open terminal NO to the normally closed terminal NC again. At this time, the main switch 112 of the door lock switch 110 is held at the on state and thus the door 20 is successfully locked.

The main motor 150 performs or stops the operation of the washing machine including a washing cycle, a rinsing cycle and a dehydrating cycle according to the motor control signal of the control unit 130. For example, when the control unit 130 determines that the door 20 is opened, the driving of the main motor 150 is stopped such that the operation of the washing machine is stopped.

The display unit 160 displays the operation state of the washing machine to a user according to the display control signal from the control unit 130 and displays an error message if the user operates the washing machine in a state in which the door 20 is opened or if the door 20 is forcibly opened during the operation of the washing machine.

Hereinafter, the operation of the door lock control device of the washing machine and the effect thereof will be described.

Prior to the description of the operation , the common terminal COM is connected to the normally closed terminal NC in the 3-pole switch 141 of the door lock relay 140.

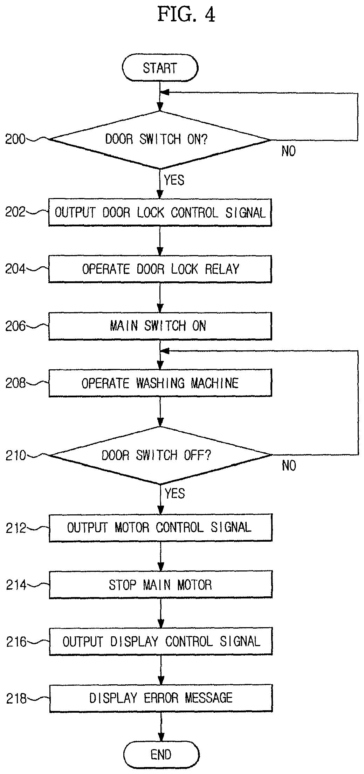

FIG. 4 is a flowchart illustrating a door lock control method of a washing machine according to an embodiment.

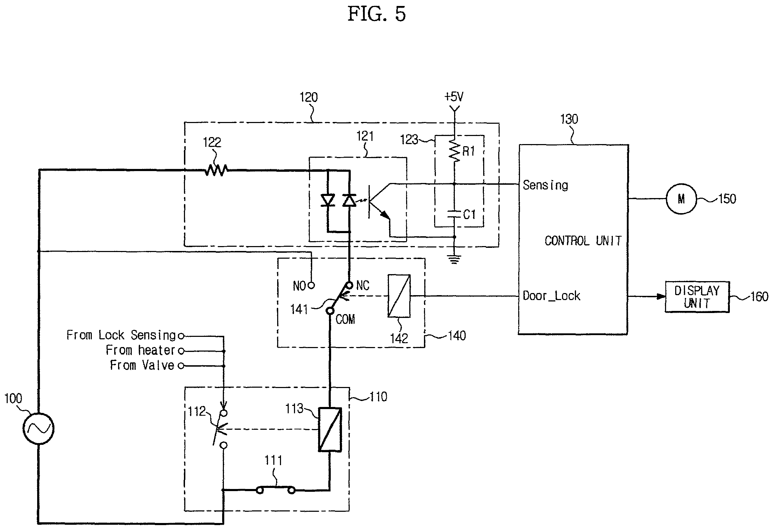

In FIGS. 4 and 5, when the door 20 of the washing machine is closed, the contact of the door switch 111 of the door lock switch 110 is closed. If the contact of the door switch 111 is closed, the current of the power supply 100 flows to the 3-pole switch 141 of the door lock relay 140 through the photo-coupler 121 of the sensor unit 120. At this time, in the 3-pole switch 141 of the door lock relay 140, since the common terminal COM is connected to the normally closed terminal NC, the current passes through the 3-pole switch 141 so as to form a closed loop from the door switch 111 of the door lock switch 110 to the power supply (see a thick line of FIG. 5).

Since minute current flows in the photo-coupler 121 through the contact of the door switch 111, the photo-coupler 121 senses the contact state of the door switch 111 and outputs the door opening/closing signal to the input terminal (Sensing) of the control unit 130.

Accordingly, the control unit 130 determines the opened/closed state of the door 20 according to the door opening/closing signal received from the sensor unit 120 and determines whether the door switch 111 is turned on (200).

As the result of the determination of Operation 200, when the door switch 111 is turned on, the control unit 130 determines that the door 20 is closed and outputs the door lock control signal to the door lock relay 140 through the output (Door_Lock) (202).

In the door lock control signal, as shown in FIG. 3, the rectangular pulse is output for a predetermined time (about 25-30msec) such that the door lock relay 140 operates in the pulsed mode, and the time interval between pulses is gradually increased (1 sec, 3 min, 30 min, ...) according to the number of times of sensing of the contact of the door switch 111 to protect the door lock relay 140.

Accordingly, in the door lock relay 140, the current flows in the control solenoid 142 for the predetermined time (25 to 30 msec) according to the door lock control signal output from the output terminal (Door_Lock) of the control unit 130 and the common terminal COM of the 3-pole switch 141 is switched from the normally closed terminal NC to the normally open terminal NO (204).

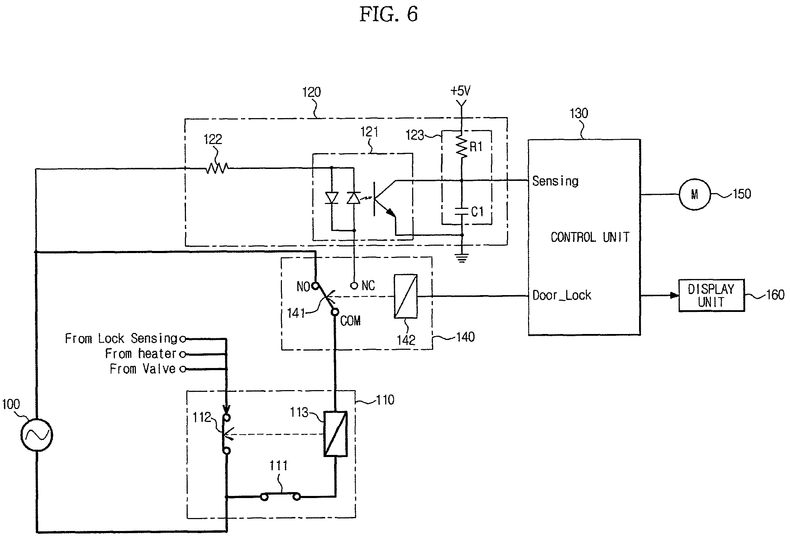

When the common terminal COM of the 3-pole switch 141 is switched from the normally closed terminal NC to the normally open terminal NO, current of the power supply 100 flows to the main solenoid 113 of the door lock switch 110 through the common terminal COM and the normally open terminal NO of the 3-pole switch 141 of the door lock relay 140. At this time, the current passing through the main solenoid 113 forms a closed loop from the door switch 111 to the power supply (see a thick line of FIG. 6).

Accordingly, the current flows in the main solenoid 113 of the door lock switch 110, the main switch 112 is turned on, and the door 20 is mechanically locked (206).

When the main switch 112 is turned on and the door is successfully locked, the operation of the washing machine including the washing cycle, the rinsing cycle and the dehydrating cycle is performed according to a washing condition selected by the user (208).

If the door 20 is forcibly opened during operation of the washing machine for some reason, only the door 20 is opened in a state in which the main switch 112 is turned on. When the door 20 is opened, the contact of the door switch 111 of the door lock switch 110 is opened. If the contact of the door switch 111 is opened, the current of the power supply 100 does not flow to the 3-pole switch 141 of the door lock relay 140 through the photo-coupler 121 of the sensor unit 120. At this time, since the common terminal COM and the normally closed terminal NC are connected again in the 3-pole switch 141 of the door lock relay 140, minute current does not flow in the photo-coupler 121. Thus, the photo-coupler 121 senses the contact state of the door switch 111 and outputs the door opening/closing signal to the input terminal (Sensing) of the control unit 130.

Accordingly, the control unit 130 determines the opened or closed state of the door 20 according to the door opening/closing signal received from the sensor unit 120 and determines whether the door switch 111 is turned off (210).

As the result of determination of Operation 210, when the door switch 111 is turned off, the control unit 130 determines that the door 20 is opened and outputs the motor control signal to the main motor 150 (212).

Then, the main motor 150 is stopped according to the motor control signal of the control unit 130 so as to stop the operation of the washing machine (214).

In addition, the control unit 130 outputs the motor control signal and outputs the display control signal to the display unit 160 (216).

Accordingly, the display unit 160 displays an error signal according to the display control signal of the control unit 130 (218).

Although the door lock control device is applied to a washing machine in the embodiments, the embodiments are not limited thereto. Even when the embodiments are applied to a dish washer, a drier, a cooker or the like, the same advantages may be obtained as in the embodiments.

Although a few embodiments have been shown and described, it would be appreciated by those skilled in the art that changes may be made in these embodiments without departing from the principles of the invention, the scope of which is defined in the claims and their equivalents.

## Claims

1. A door lock control device of a washing machine, the door lock control device comprising:
a door (20);
a door lock switch (110) including a door switch (111) turned on/off according to closing or opening of the door (20) to mechanically lock or unlock the door and to sense the closing or opening of the door, a main switch (112) to power on or off electrical parts of the washing machine, and a main solenoid (113) in which current flows according to an operation of a door lock relay (140) to control a switching operation of the main switch (112);
**characterized by**
a sensor (120) to sense an operation state of the door switch (111) and to output a door closing or opening signal;
a control unit (130) to determine the closed or opened state of the door (20) according to the door closing or opening signal and to output a door lock control signal;
the door lock relay (140) including a 3-pole switch (141) to control the switching operation of the main switch (112) based on the output door lock control signal and a control solenoid (142) in which current flows according to the output door lock control signal, to control a switching operation of the 3-pole switch (141);
a main motor (150) driven under the control of the control unit (130), wherein the control unit (130) stops the driving of the main motor (150) if the control unit (130) determines the door (20) is opened during operation of the washing machine; and
a display unit (160) to display an error message according to the stoppage of the main motor (150) under the control of the control unit (130),
wherein the 3-pole switch (141) comprises a common terminal coupled to the main solenoid (113) and is configured to electrically connect the common terminal with a normal open terminal coupled to a power source such that the main solenoid (113) operates the main switch (112) to be turned on when the door (20) is closed.

2. The door lock control device according to claim 1, wherein the control unit (130) stops the operation of the washing machine if a determination is that the door (20) is opened during the operation of the washing machine.

3. The door lock control device according to claim 1,
wherein the door lock switch (110) senses whether the door is forcibly opened in a state in which the door (20) is locked.

4. The door lock control device according to claim 1, wherein the door lock control signal operates the door lock relay (140) in a pulsed mode to enable current to flow in the main solenoid (113) for a predetermined time.

5. The door lock control device according to claim 1, wherein the door switch (111) is connected between the main solenoid (113) and a power supply (100), the main solenoid (113) is connected between the door lock relay (140) and the door switch (111), and the main switch (112) connects the power supply (100) and the electrical part.

6. The door lock control device according to claim 1, wherein the door lock switch (110) has three terminals to connect the door switch (111), the main solenoid (110) and the main switch (112).

7. A door lock control method of a washing machine, the door lock control method **characterized by** the steps of:
operating a door lock switch (110) to lock the door (20) if a door is closed;
performing an operation of the washing machine in a state in which the door (20) is locked;
sensing whether the door is opened during the operation of the washing machine; and
stopping the operation of the washing machine if the door is sensed to be opened during the operation of the washing machine,
wherein the door lock switch (110) is turned off or turned on according to closing or opening of the door (20) to mechanically lock or unlock the door and to sense the closing or opening of the door.

## Patentansprüche

1. Türschlosssteuervorrichtung für eine Waschmaschine, wobei die Türschlosssteuervorrichtung aufweist:
eine Tür (20);
einen Türverriegelungsschalter (110) mit einem Türschalter (111), der gemäß eines Schließens oder Öffnens der Tür (20) zum mechanischen Verschließen oder Öffnen der Tür ein- oder ausgeschaltet wird und zum Erfassen des Schließens oder Öffnens der Tür,
einem Hauptschalter (112) zum Ein- oder Ausschalten der elektrischen Teile der Waschmaschine, und
einem Hauptelektromagneten (113), in welchem gemäß einer Tätigkeit eines Türverriegelungsrelais (140) Strom fließt, um eine Schalttätigkeit des Hauptschalters (112) zu steuern,
**gekennzeichnet durch**
einen Sensor (120) zum Erfassen eines Betriebszustandes des Türschalters (111) und zur Ausgabe eines Türschließ- oder -öffnungssignals;
eine Steuereinheit (130) zur Bestimmung des geschlossenen oder geöffneten Zustands der Tür (20) gemäß des Türschließ- oder -öffnungssignals und zur Ausgabe eines Türverriegelungs-Steuersignals;
wobei das Türverriegelungsrelais (140) einen Drei-Kontakt-Schalter (141) zur Steuerung der Schalttätigkeit des Hauptschalters (112) umfasst, basierend auf dem ausgegebenen Türverriegelungs-Steuersignal, und einen Steuerelektromagneten (142), in dem Strom gemäß des ausgegebenen Türverriegelungs-Steuersignals fließt, um eine Schalttätigkeit des Drei-Kontakt-Schalters (141) zu steuern;
einen Hauptmotor (150), angetrieben unter der Steuerung der Steuereinheit (130), wobei die Steuereinheit (130) eine Betätigung des Hauptmotors (150) anhält, falls die Steuereinheit (130) feststellt, dass die Tür (20) während der Tätigkeit der Waschmaschine geöffnet wird, und
eine Anzeigeeinheit (160) zur Anzeige einer Fehlernachricht gemäß des Anhaltens des Hauptmotors (150) gesteuert **durch** die Steuereinheit (130), wobei der Drei-Kontakt-Schalter (141) einen gemeinschaftlichen Kontakt gekoppelt mit dem Hauptelektromagneten (113) und ausgelegt zur elektrischen Verbindung des gemeinschaftlichen Kontakts mit einem "Normal Offen"-Kontakt aufweist, welcher mit einer Leistungsquelle gekoppelt ist, so dass der Hauptelektromagnet (113) den Hauptschalter (112) zum Einschalten betätigt, wenn die Tür (20) geschlossen ist.

2. Türschlosssteuervorrichtung nach Anspruch 1, wobei die Steuereinheit (130) die Betätigung der Waschmaschine anhält, falls eine Feststellung getroffen wurde, dass die Tür (20) während der Tätigkeit der Waschmaschine geöffnet wird.

3. Türschlosssteuervorrichtung nach Anspruch 1, wobei der Türverriegelungsschalter (110) erfasst, ob die Tür gewaltsam geöffnet wird, in einem Zustand, in dem die Tür (20) verriegelt ist.

4. Türschlosssteuervorrichtung nach Anspruch 1, wobei das Türverriegelungs-Steuersignal das Türverriegelungsrelais (140) in einem Impulsmodus betätigt, um ein Fließen von Strom in dem Hauptelektromagneten (113) für eine vorbestimmte Zeit zu ermöglichen.

5. Türschlosssteuervorrichtung nach Anspruch 1, wobei der Türschalter (111) zwischen dem Hauptelektromagneten (113) und einer Spannungsquelle (100) verschaltet ist, wobei der Hauptelektromagnet (113) zwischen dem Türverriegelungsrelais (140) und dem Türschalter (111) verbunden ist, und der Hauptschalter (112) die Spannungsversorgung (100) und elektrisches Teil verbindet.

6. Türschlosssteuervorrichtung nach Anspruch 1, wobei der Türverriegelungsschalter (110) drei Kontakte zur Verbindung von Türschalter (111), Hauptelektromagnet (110) und Hauptschalter (112) aufweist.

7. Türschlosssteuerverfahren einer Waschmaschine, wobei das Türschlosssteuerverfahren durch folgende Schritte gekennzeichnet ist:
Betätigen eines Türverriegelungsschalters (110) zum Verriegeln der Tür (20), wenn eine Tür geschlossen ist;
Durchführen einer Betätigung der Waschmaschine, in einem Zustand, in dem die Tür (20) verriegelt ist;
Erfassen, ob die Tür während der Betätigung der Waschmaschine geöffnet wird, und
Anhalten der Betätigung der Waschmaschine, falls ein Öffnen der Tür während der Betätigung der Waschmaschine erfasst wird, wobei der Türverriegelungsschalter (110) ausgeschaltet oder eingeschaltet wird gemäß einem Schließen oder Öffnen der Tür (20), zum mechanischem Verriegeln oder Entriegeln der Tür und zum Erfassen des Schließens oder Öffnens der Tür.

## Revendications

1. Dispositif de contrôle de verrou de porte d'une machine à laver, le dispositif de contrôle de verrou de porte comprenant :
une porte (20) ;
un commutateur de verrou de porte (110) incluant un commutateur de porte (111) fermé ou ouvert selon la fermeture ou l'ouverture de la porte (20) pour verrouiller ou déverrouiller mécaniquement la porte et pour détecter la fermeture ou l'ouverture de la porte, un commutateur principal (112) pour mettre sous tension ou hors tension les composants électriques de la machine à laver, et un solénoïde principal (113) dans lequel le courant circule conformément à un fonctionnement d'un relais de verrou de porte (140) pour commander un processus de commutation du commutateur principal (112) ;
**caractérisé par**
un capteur (120) pour détecter un état de fonctionnement du commutateur de porte (111) et émettre un signal de fermeture ou d'ouverture de porte :
une unité de commande (130) pour déterminer l'état de fermeture ou d'ouverture de la porte (20) conformément au signal de fermeture ou d'ouverture de porte et pour émettre un signal de commande du verrou de porte ;
le relais de verrou de porte (140) incluant un commutateur tripolaire (141) permettant de commander le processus de commutation du commutateur principal (112) sur la base du signal de commande du verrou de porte émis et un solénoïde de commande (142) dans lequel le courant circule conformément au signal de commande du verrou de porte émis, pour commander un processus de commutation du commutateur tripolaire (141);
un moteur principal (150) entraîné sous le contrôle de l'unité de commande (130), où l'unité de commande arrête l'entraînement du moteur principal (150) si l'unité de commande (130) détermine que la porte (20) est ouverte pendant le fonctionnement de la machine à laver ; et
une unité d'affichage (160) permettant d'afficher un message d'erreur conformément à l'arrêt du moteur principal (150) sous le contrôle de l'unité de commande (130),
où le commutateur tripolaire (141) comprend une borne commune couplée au solénoïde principal (113) et est conçu pour connecter électriquement la borne commune avec une borne normale ouverte couplée à une source d'énergie de manière à ce que le solénoïde principal (113) actionne le commutateur principal (112) de manière à le fermer lorsque la porte (20) est fermée.

2. Dispositif de contrôle de verrouillage de porte selon la revendication 1, où l'unité de commande (130) arrête le fonctionnement de la machine à laver s'il est déterminé que la porte (20) est ouverte pendant le fonctionnement de la machine à laver.

3. Dispositif de contrôle de verrouillage de porte selon la revendication 1, où le commutateur de verrouillage de porte (110) détecte si la porte est ouverte par la force dans un état dans lequel la porte (20) est verrouillée.

4. Dispositif de contrôle de verrouillage de porte selon la revendication 1, où le signal de commande du verrou de porte actionne le relais de verrou de porte (140) dans un mode pulsé pour permettre au courant de circuler dans le solénoïde principal (113) pendant une durée prédéterminée.

5. Dispositif de contrôle de verrouillage de porte selon la revendication 1, où le commutateur de porte (111) est connecté entre le solénoïde principal (113) et une alimentation électrique (100), le solénoïde principal (113) est connecté entre le relais de verrou de porte (140) et le commutateur de porte (111), et le commutateur principal (112) connecte l'alimentation électrique (100) et le composant électrique.

6. Dispositif de contrôle de verrouillage de porte selon la revendication 1, où le commutateur de verrouillage de porte (110) comporte trois bornes pour connecter le commutateur de porte (111), le solénoïde principal (110) et le commutateur principal (112).

7. Procédé de commande de verrou de porte d'une machine à laver, le procédé de commande de verrou de porte étant **caractérisé par** les étapes consistant à :
actionner un commutateur de verrouillage de porte (110) pour verrouiller la porte (20) si une porte est fermée ;
faire fonctionner la machine à laver dans un état dans lequel la porte (20) est fermée ;
détecter si la porte est ouverte pendant le fonctionnement de la machine à laver ; et
arrêter le fonctionnement de la machine à laver s'il est détecté que la porte a été ouverte pendant le fonctionnement de la machine à laver,
où le commutateur de verrouillage de porte (110) est ouvert ou fermé selon la fermeture ou l'ouverture de la porte (20) pour verrouiller ou déverrouiller mécaniquement la porte et pour détecter la fermeture ou l'ouverture de la porte.
